# EUROPEAN PATENT APPLICATION

(11) **EP 4 322 350 A1**
(43) Date of publication of application: **14.02.2024**
(21) Application number: 23460028.6
(22) Date of filing: 07.08.2023
(51) Int. Cl.: H02G 13/00, E04B 1/92, E04C 3/30, E04G 21/18, E04H 9/16, H02G 3/38

(54) **LIGHTNING PROTECTION OF LARGE-AREA BUILDING STRUCTURES, ESPECIALLY WITH ROOFS EQUIPPED WITH PHOTOVOLTAIC PANELS**

(30) Priority: 12.08.2022 PL 44200722
(71) Applicant: Smycz, Eugeniusz, 75018 Paris (FR)
(72) Inventor: Smycz, Eugeniusz, 75018 Paris (FR)
(74) Representative: Warzybok, Tadeusz

(57) **Abstract**

The subject of the invention is the lightning protection of large-area building structures, especially with roofs equipped with photovoltaic panels, which is characterized in that it consists of at least one two-part down conductor to the ground for the lightning current taken over by a head (8) of a lightning rod (7), the first part of this down conductor being a cable (19) with a metal core with a cross-section of 10 mm² up to 70 mm² covered with highvoltage polyethylene insulation, the lower end of which is electrically and mechanically connected to the upper end of the second part of this two-part down conductor, which is an uninsulated conductor (27) with a cross-section of 50 mm² up to 120 mm², embedded inside the reinforced concrete column (6) and inseparably connected with its steel reinforcement (22), the lower end of the uninsulated conductor (27) being connected through the control connector (29) to the conductor (27') connected to the earthing (28).

## Description

The subject of the invention is a lightning protection of large-area building structures, especially structures such as halls of logistics centres, industrial halls and commercial halls, the roofs of which with metal sheet covering are equipped with photovoltaic panels, wherein in this lightning protection a lightning rod is used with early emission of upward stepped leader, developing towards an electrically charged thundercloud, protecting these structures against atmospheric discharge.

Lightning is a natural, difficult to predict phenomenon, causing electrical discharges that can cause large destructive effects.

Thunderclouds charged with an electric charge in the direction to the ground constituting the lightning front have an electric charge in the range of a few to several tens of Coulombs. Then, on the metal elements of the buildings that are in the electromagnetic field of this charge, a charge is induced proportional to the so-called equivalent area of these elements.

In order to direct the electric discharge and control the flow of this charge from the resulting thundercloud towards the ground, lightning protections of various design solutions are used.

In the well-known Franklin lightning rod, the equivalent surface is the surface of its blade, which, when placed in a strong electric field, causes ionization of the air around the blade. According to this, the larger the equivalent surface of the metal element is in the form of a blade, the greater electric charge is induced. Therefore, with consideration to the effect of the wind force and the aesthetics of the lightning rod, the aim is to make the equivalent surface of the lightning rod blade as small as possible. This means that the optimal equivalent surface of the lightning rod blade, which will induce an electric charge, is one of the basic conditions in the designed structure of the lightning rod, wherein the main problem is to transfer this charge to its interior in order to energize the air ionizing system, which is called the induction module. Another problem is the formation of distributed capacitances in the ionizing system, which are caused by the equivalent capacitances of the capacitors of the equivalent surface of the lightning rod in relation to the ground, wherein the energy of the electric charge of these capacitors generated in this way is not used, thus causing a loss of this energy. At the same time, it was found that the efficiency of the lightning rod is the greater the faster the ionization of the air around its blade takes place, wherein various methods of increasing this efficiency are known.

A lightning rod is also known from the Polish patent description No. PL192704 with accelerated ionization of the air around its blade, protecting buildings against atmospheric discharges, equipped with a Franklin electrode connected to the ground and the electrical system, consisting of a main ionization electrode equipped with a flashover electrode, connected in a series through an induction coil and a spark gap with the ground, and at least one collecting electrode directly connected to the ground, the collecting electrode being located opposite and near the flashover electrode, and the spark gap having a blade and a flat electrode situated opposite it. In another version of this lightning protector, it consists of a main ionization electrode equipped with a flashover electrode, connected in a series with the ground through a coil and a spark gap, the collecting electrode directly connected to the ground located opposite and near the flashover electrode, and an electronic system and an optical element connected to the transistor base. The collector of this transistor is connected to one end of the coil winding, which forms a transformer with the next coil situated opposite to it, and the other end of the first coil winding is connected through a resistor and a power source with an optical element, wherein in the electric circuit of this system between the second end of the first coil and the resistor, and between the optical element and the power source, capacitors connected in a series are included that are connected to the ground of the electronic system. The disadvantage of this solution is the relatively low efficiency of ionization increase around the lightning rod blade, amounting to 30-40%, caused by the necessary current flow between the flashover electrode and the collecting electrode.

A lightning rod with accelerated ionization of air around its blade is also known from the Polish patent description No. PL213623, protecting buildings against atmospheric discharges, containing an external ionization collecting electrode, ended with a blade, connected in a series with the ground through an inductive module consisting of a coil and a spark gap placed in an insulating circuit, which is characterized in that it has an additional internal focusing electrode, in which an inductive module is placed, wherein this electrode is electrically connected to a grounded base, electrically connected to a flat electrode of the spark gap, the blade of which is connected through the inductive coil of the induction module to the external collecting electrode, and in addition the focusing electrode is made in the shape of a sleeve made of a current-conducting material, and its height is preferably half the length of the induction coil, the end of which is electrically connected through the blade and the flat electrode of the spark gap to the collective external ionization electrode, and the other end of this coil is connected to the grounded base, wherein in both cases, the induction coil is preferably cylindrical in shape.

In addition, for a long time to improve the performance of the lightning protection, the association of initiating means with the inert collecting electrode of the lightning rod was proposed, to promote the formation of the downward stepped leader, by triggering faster formation of the downward stepped leader with respect to the simple inert collecting electrode. In general, these initiating means act by creating additional ionization of the air near the free end of the collecting electrode. These advanced lightning protections are commonly called PDAs. Examples of PDAs are described in particular in French patent applications FR2543370, FR2590737, FR2973598, FR2943487 and US2009/000802.

According to the French patent application FR2543370, the initiation is achieved by means of a piezoelectric device on which mechanical pressure is exerted by the force of wind, but the appearance of this wind when a storm is approaching is accidental and makes the lightning protection less reliable.

In the French patent application FR2590737, initiation is achieved by means of at least one additional electrode which is placed adjacent to the free end of the collecting electrode and which is applied such that a high voltage electrical discharge is established between this electrode and the free end of the collecting electrode, and thus causes supplementary ionization of the air near the free end of the collecting electrode.

In the French patent application FR2973598, ionization is achieved for the initiation of the lightning protection by means of electromagnetic radiation of the focused laser type or in the immediate vicinity of the free end of the collecting electrode.

Known initiating devices, especially of the high-voltage discharge type or of the electromagnetic radiation type, can be improved by introducing precise trigger synchronization with respect to the evolution of the electric field so as not to cause too early triggering or too late additional ionization. Accordingly, automatic triggering systems for the initiating device have been developed. French patent application FR2590737, for example, discloses an automatic triggering system based on detection of variations in the electric field generated by a thunderstorm. French patent application FR2943487 discloses, for example, an automatic triggering system based on optical detection of the corona discharge effect.

Compared to a lightning protection using a simple inert collecting electrode and still commonly referred to as the "Franklin's air terminal", lightning protections with early streamer emission advantageously enable the extension of the protection zone (or protection radius) of the lightning protection, as they are capable of imparting (immediate initiation) an upward stepped leader ahead of time, with respect to the simple inert collecting electrode. This upward stepped leader, carried by the electric field generated by the thunderstorm, has enough time to get high enough to meet a downward stepped leader oriented to the ground, long before other objects (metal or not) in the surrounding will have the capability of doing the same. The collecting electrode of the lightning protection is therefore a de facto a lightning receiver, thanks to which the lightning cannot fall elsewhere in the protection zone defined by the operation of the lightning protection.

Regardless of the type of lightning protection, when the storm intensifies, the corona effect described before causes the appearance of an actual "corona", also called "corona flux" or "corona current", in the collecting electrode of the lightning protection, which in the initial period (when the storm is still far away) has essentially continuous current (direct current). At that time, when the global electric field becomes large enough, the corona effect takes place in pulsed mode and the intensity peak becomes larger and larger until it reaches a corona peak which is high enough for the generated streamer to find suitable field conditions and spread slower upwards in the form of an upward stepped leader.

On the other hand, the lightning protection of metal building structures known from the Polish patent description, especially for rectangular storage containers, using a lightning protection with early emission of its leader and with accelerated air ionization and inductive support, consists in the fact that an inductive module is placed inside a metal head, consisting of a metal sleeve electrode, the inner surface of which is covered with a layer of dielectric, and inside it there is an inductive coil connected in a series with the upper end through an upper spark gap with the tip of this head, or this inductive coil is connected in a series with its upper end to the tip and with its lower end to a lower spark gap, wherein this coil with a suitable spark gap is connected to the base of this head, mounted on a tubular mast isolated from the metal surface of the container, connected to the earth electrode or earth electrodes by means of a high-voltage insulated wire or high-voltage insulated wires, while the space between the inner surface of the metal sleeve and the upper part of the induction coil and surrounding it outer surface of the sleeve electrode of the lightning protection is filled with a dielectric, the dielectric layer of the sleeve electrode and the dielectric filling being polyurethane resin.

Currently, there is a tendency to install the photovoltaic panels on the roofs of large-area buildings (around 100,000 m²), including the roofs of logistics centres. Lightning protection of this type of objects consists in installing high vertical air terminals on the roofs with connections for the lightning current via the down conductors to the ground. During the flow of lightning current through the conductors carrying this current, an electric potential is created that can cause an electrical breakdown (spark flash) to the grounded metal elements, even at a distance of 1 m and more. The EN 62-305 standard covering lightning protection also defines the separation distance, which is directly proportional to the length of the down conductor, which means that the longer the length of the down conductor to the ground, the greater the separation distance is required. Spark flash is a potential source of fires and for this reason so-called equipotential bondings are implemented, that are the electrical and mechanical connection between earthed metal elements and down conductors when this distance is less than the permissible separation distance, which is defined in the standard on the scope of lightning protection. Even though this is a solution that prevents the spark flash between the down conductors and metal elements during a lightning discharge, it causes the metal element to reach the potential of the down conductor. In the case of photovoltaic panels installed on the roof of a building, this may lead to damage to the connectors, which in the event of a short circuit of the contacts of these connectors (photovoltaic panels and wires connecting these panels) may be a source of fire. Another threat resulting from the equipotential bonding is the possibility of electric shocks to people staying in the vicinity of, for example, metal roofs having equipotential bonding with the down conductor for the lightning current.

There are known solutions with lightning current discharged by wires in high-voltage insulation, consisting in connecting a lightning rod isolated from the building to the ground by means of wires in high-voltage insulation. Such solutions can be used for down conductors with a length of several dozen meters, wherein for longer lengths the number of down-conductors must be multiplied. This is determined by the limited insulation strength of the high-voltage cable. For large halls, the length of the down conductors is in the order of 50m, and can even reach the length of 100 m.

While this solution is possible for application from a technical point of view, due to the cost of such a lightning protection system, it becomes unacceptable to the investor, because the price of an insulated wire is at least ten times higher than that of a standard wire (for example, made of aluminium wire with a diameter of 8 mm).

For this reason, solutions are sought in which the down conductors carrying the lightning current to the ground are as short as possible, and such solutions include solutions with down conductors inside a building structure.

There are also known solutions with down conductors for lightning current inside the building structure using structural reinforcements of reinforced concrete columns for this purpose, whose lower ends of metal reinforcing bars are connected to the earthing of this object, and their upper ends to the metal structure of the roof. In such a solution, when a lightning strikes the air terminal, a high lightning current will flow through the metal structure of the roof to many reinforced concrete columns of this object. Thanks to such separation of the lightning current, the potential occurring on a metal roof structure is similar to the potential of earthed objects and does not pose the above-mentioned threats.

On the other hand, for buildings without the metal roof structure, with structure based on reinforced concrete elements with metal reinforcement without electrical and mechanical connections between their metal reinforcements, separation of lightning current is not possible. Assuming that the building structure has a metal roof covering and that the lightning current flows in one of these reinforced concrete columns, it will cause an electric potential that may cause an electrical breakdown in the upper part of this column to the metal elements of the roof (metal fittings, corrugated roofing sheet) and affect the stability of the structure of such building.

Carrying out the lightning current earthing with an insulated wire along the reinforced concrete column of the building structure poses a risk of damage to the insulation of the lightning current earthing while the structure is in operation, as it may cause a spark flash to the metal elements during the lightning discharge, and at the same time be a source of fire in such a structure.

Carrying out the lightning current earthing with an insulated wire inside a reinforced concrete column of the building structure poses a risk of damage to the insulation of this current earthing and the possibility of a spark flashing to the metal reinforcement of the reinforced concrete column and may cause the column to crack.

Lightning protection with PDA lightning rods with early leader emission requires the full covering of the building structure with protection zones. Due to this requirement, the location of lightning rods becomes imposed and the lightning rod may be located at a distance of several to several dozen meters from the column intended to discharge the lightning current. As a result, the length of the down conductor is increased and, consequently, a larger separation distance is required, while the dielectric strength of the down-conductor insulation is a technical parameter given by the cable manufacturer. In connection with the above, the possibility of dividing the lightning current by using an additional lead should also be considered, in which case the separation distance will be reduced, because it is proportional to the lightning current flowing in a given down conductor. In addition, the use of a second down conductor increases the reliability of the lightning protection system, for example during renovation work, wherein the possibility of damage to this down conductor cannot be excluded.

The term "electrical and mechanical connection" used in the further part of the description and patent claims should be understood as connections in accordance with the PN-EN 62561-1:2017-07 standard, as amended, and described in its part 1 of IEC 62561, that are connections: exothermic, soldered, welded, crimped, corrugated, overlapping and screw or bolted.

The purpose of the invention is to develop a new, simple and compact system of elements forming lightning protection for large-area buildings with metal roofs, including those equipped with photovoltaic panels, eliminating the disadvantages and inconveniences of technical solutions known so far. The purpose of the invention is also to propose a new lightning protection for large-area building structures, which enable overcoming the problem of delay in the initiation of the downward stepped leader, related to the spreading of the spatial charge near the free end of the collecting electrode, before the emission of upward stepped leader, and at the same time improved protection against lightning strikes.

The essence of the technical solution for lightning protection of large-area building structures, especially buildings with metal roofs equipped with photovoltaic panels using a PDA type lightning rod mounted on a mast isolated from the metal surface of the roof of the lightning-protected building, connected to the earthing by means of wires, is characterized in that it consists of at least one two-part down connector to the ground for the lightning current taken over by the lightning rod head, the first part of this down connector being a cable with a metal lead with a cross-section ranging from 10mm² to 70 mm², covered with high-voltage polyethylene insulation, the lower end of which is electrically and mechanically connected to the upper end of the second part of this two-part down connector, which is an uninsulated conductor with a cross-section ranging from 50 mm² to 120 mm², embedded inside the reinforced concrete column and inseparably connected to its steel reinforcement, with the lower end of this uninsulated conductor being connected through a control connector to another conductor connected to the earthing.

It is advantageous when the upper end of the metal lead of the insulated cable is electrically and mechanically connected through the connector with the lower end of the upper uninsulated section of the metal mast, and the lower part of this mast placed in a plastic tubular insulator is fastened by means of holders together with the upper part of the insulated cable to the upper offset of the reinforced concrete column, while the further part of the insulated cable above the roof of the protected building structure is placed in an insulating pipe culvert placed in the opening of this roof and is electrically and mechanically connected through the connector attached to the upper end of the reinforced concrete column via the upper end of the uninsulated conductor with a current discharge resistance of R< 0.10 OHM, which is inseparably connected with the steel reinforcement of this column through metal stirrups at intervals of L=0,10 m - 2m and is connected to the earthing.

Preferably, this protection consists of two two-part down conductors to the ground for the lightning current taken over by the head of the lightning rod attached to the upper offset of the reinforced concrete column, connected to the earthing by means of two insulated cables located next to each other at a distance of t = 18 - 25 mm, the lower ends of which are placed in two insulating pipe culverts, tightly embedded in two through holes made in the roof with a metal covering and connected electrically and mechanically with the upper ends of two uninsulated conductors, the lower ends of which are connected through a connector with two other conductors connected to the earthing of the protected building structure.

In a preferred embodiment, the protection consists of two two-part down conductors to the ground for the lightning current taken over by the heads of lightning rods attached to the upper offset of two identical reinforced concrete columns spaced at a distance of F = 18 m - 22 m and an insulated conductor, the ends of which are electrically and mechanically connected through a connector with the upper uninsulated parts of metal masts, wherein this conductor is attached to the lower insulated part of the metal mast of the lightning rod attached to the first reinforced concrete column and to the upper offset of this column, and to the upper surface of the refractory wall and to the insulated part of the metal mast of the lightning rod placed on the second reinforced concrete column.

In another preferred embodiment, the two-part down conductor to the ground for the lightning current taken over by the head of the lightning rod attached to the upper offset of the reinforced concrete column is an insulated cable electrically and mechanically connected to the uninsulated upper section of the metal mast of the lightning rod, one lower end of which is electrically and mechanically connected through a connector to the upper end of the uninsulated conductor embedded inside the first reinforced concrete column connected through the control connector to the conductor connected to the first earthing, while the second part of this insulated cable is attached to the other side of the lower insulated part of the metal mast and to the upper offset of the first reinforced concrete column and to the upper surface of the refractory wall, and the second lower end of this cable, through the insulating pipe culvert tightly embedded in a through hole in the wall and roof, is led to the connector located on the second reinforced concrete column and is electrically and mechanically connected to the upper end of the uninsulated conductor embedded inside the second reinforced concrete column and inseparably connected to the steel reinforcement of this column, and the lower end of the uninsulated conductor is connected through the control connector with another uninsulated conductor connected to the second earthing, the distance between both reinforced concrete columns being 18 m - 22 m.

It is advantageous when the connector attached to the external upper surface of the reinforced concrete column is located at a distance of S= from 0.7 m to S=1.5 m from the lower surface of the roof of the building structure, and the control connector attached to the external surface of the lower end of this column is located above the floor of the protected building structure at the height of k=0.5 m.

It is also preferred that the insulated cable has a lead made of copper or aluminium, and the uninsulated conductor is a galvanized steel strip or a bare lightning protection strip.

It is also advantageous when the tubular insulators of the lower parts of the masts are made of polyvinyl chloride (PVC), and the insulated conductor connecting the masts of both reinforced concrete columns is a copper or aluminium wire or galvanized steel covered with high-voltage insulation or a copper or aluminium cable placed in a lightning protection tube.

It is also advantageous when the height of the refractory wall is 0.80 m to 1.20 m.

It is also advantageous when the conductor connected to the earthing is a steel strip placed in an insulating sheath.

The goals set above for this invention were achieved thanks to the fact that the lightning rod ended with the head with early leader emission of the PDA type is mounted on the roof of the protected building structure and is electrically isolated from the metal elements of this building and has at least one connected in a series two-piece down conductor to the ground for the lightning current taken over by this head, the first part of which being electrically and mechanically connected to the head of the high mast by means of a high-voltage insulated cable, while the second part of this down conductor is made of the uninsulated metal conductor placed inside the reinforced concrete column, the upper end of which is electrically and mechanically connected through the metal connector to the lower end of the first part of this down conductor, and the lower end is also electrically and mechanically connected through the metal connector to the earthing of this structure.

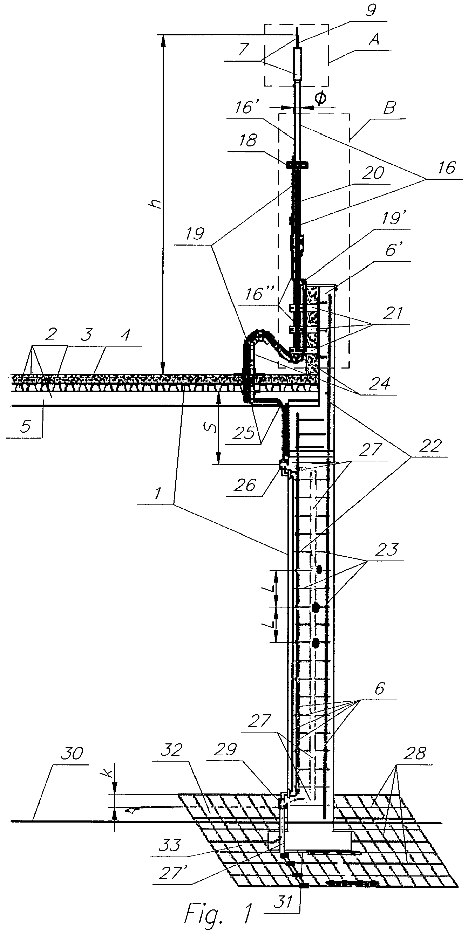

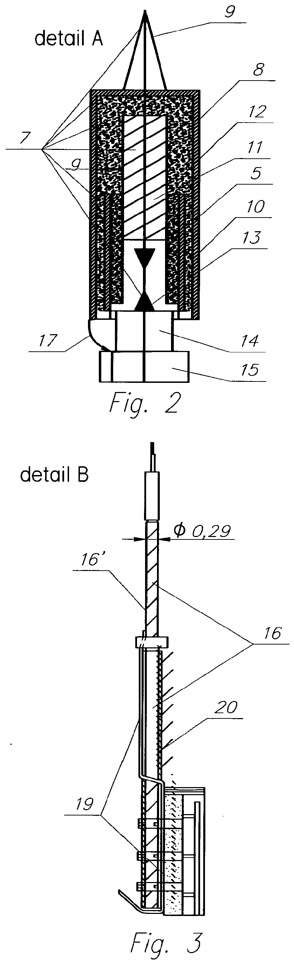

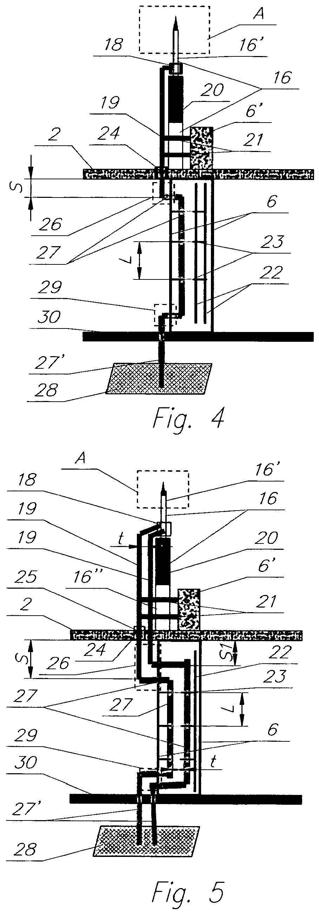

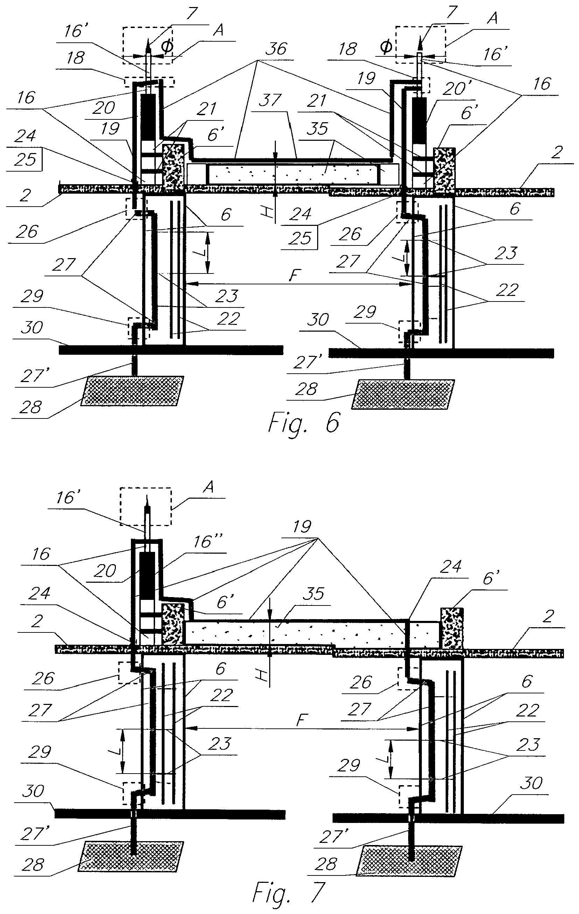

The subject of the invention in five exemplary embodiments of lightning protection of a large-area building structure performing the function of a logistics centre, is shown in fig. 1-7, in which Fig. 1 - 3 schematically show the first variant of this lightning protection where fig. 1 shows a diagram of the lightning protection with the head of the lightning rod with early leader emission of the PDA type fixedly mounted in the upper part of the uninsulated metal mast, electrically and mechanically connected to the upper end of the insulated cable constituting the first part of the two-part down conductor for the lightning current to the ground, and its lower end through the pipe culvert embedded in the roof with the metal covering is electrically and mechanically connected to the upper end of the galvanized steel strip constituting the second part of this two-part down conductor for the lightning current to the ground, embedded inside the reinforced concrete column, mechanically and electrically connected to the steel reinforcement of this column, the lower end of which is connected to the earthing of this protected structure, fig.2 - enlarged detail "A" of the lightning rod with early leader emission of the PDA type included in these five embodiments of the protection in the vertical axial cross section, Fig. 3 - enlarged detail "B" of the first embodiment of the lightning protection, covering the upper uninsulated section of the lightning rod mast with its further lower part placed in a tubular insulator, connected to the upper end of the copper cable with high-voltage polyethylene insulation, which are connected to the upper offset of the reinforced concrete column, in a vertical axial cross section, fig. 4 - schematically shows in a vertical axial cross section the second embodiment of the lightning protection shown in Fig. 1, with the second part of the two-part down conductor for the lightning current to the ground made of a bare steel strip electrically and mechanically connected to the lower end of the insulated cable, embedded inside the reinforced concrete column and electrically and mechanically connected to the steel reinforcement of this column, the lower end of which is connected to the earthing of this protected structure, fig. 5 - schematically shows, in a vertical axial cross section, the third embodiment of this lightning protection system, with the lower uninsulated end of the lightning rod mast electrically and mechanically connected to the two upper ends of the leads of two insulated cables, the lower ends of which are electrically and mechanically connected through two sealing pipe culverts to the upper ends of two galvanized steel strips embedded inside the reinforced concrete column and electrically and mechanically connected to the steel reinforcement of this column, the lower ends of which are electrically and mechanically connected to the earthing of the building structure, fig. 6 - schematically shows, in a vertical axial cross section, the fourth embodiment of the lightning protection of a large-area building structure, having two identical lightning protections constituting the first embodiment of this protection presented in fig. 1, the reinforced concrete columns of which are spaced apart at a distance of L = 20 m, and in addition the upper uninsulated ends of both steel masts are electrically and mechanically connected to the ends of the insulated copper cable placed in the lightning protection tube and fixed on the refractory wall with a height of H = 1 m above the roof of the protected structure, and fig. 7 - schematically shows, in a vertical axial cross section, the fifth embodiment of the lightning protection of a large-area building structure with lightning protection constituting its first embodiment presented in fig. 1, wherein the second end of the insulated cable connected to the uninsulated part of the lightning protection rod is located at the refractory wall with a height of H = 1 m protruding above the surface of the metal roof of the protected structure, and is also electrically and mechanically connected through the second pipe culvert of the metal roof with the upper end of the uninsulated steel strip embedded in the second reinforced concrete column, the lower end of which is electrically and mechanically connected to the earthing of the building structure.

### Example 1

As shown in figs. 1-3, the first embodiment of the lightning protection of a large-area building structure 1, a roof 2 of which with sheet metal roofing 3 insulated with mineral wool 4 supported on horizontally located reinforced concrete beams 5 supported by vertical reinforced concrete columns 6 with their external upper rectangular offsets 6' has a lightning rod 7 with early emission of its leader of the PDA type, which is a sleeve head 8 with its tip 9 made of stainless steel, in which an inductive-capacitive system containing a metal sleeve electrode 10 is mounted with the lower end of an induction coil 11 placed in it, which together with this electrode is covered with a layer of dielectric 12 made of dielectric polyurethane resin with a thickness of g=5mm, wherein the induction coil 11 is connected at one end to the tip 9 of the sleeve head 8 of the lightning rod 7, and with the other end it is connected in a series with a spark gap 13. In turn, the sleeve head 8 with the sleeve electrode 10 placed in it, is connected with its base 14 to a metal connector 15, which is connected in a threaded manner to the upper end of an upper uninsulated section 16' of the cylindrical metal mast 16 with a diameter of φ=30 mm, wherein the lower end of the sleeve head 8 is connected through an external spark gap 17 to its base 14. In turn, the lower end of the uninsulated upper section 16' of a metal mast 16, by means of a connector 18 implemented by the screwing method, is electrically and mechanically connected to the upper end of the first part of the two-part down connector for the lightning current taken over by the head 8 to the ground, of the lightning rod 7 with the early emission of its leader - of the PDA type, which is a single core insulated cable 19, the copper lead of which, as a lightning current conductor with a cross-section of 35 mm², is covered with high-voltage polyethylene insulation. The upper section of the insulated cable 19 is attached to the lower section 16" of the metal mast 16 placed in a tubular insulator 20 made of plastic (PVC) resistant to variable weather conditions, used to isolate the head 8 of the lightning rod 7 from the lightning-protected building structure 1. In addition, the lower end of the lower section 16" of the metal mast 16 together with the side offset 19' of the insulated cable 19 situated next to the mast 16, by means of holders 21, are attached to an upper offset 6' of a reinforced concrete column 6, equipped with main vertical steel reinforcing bars 22 and transversely located steel bars - stirrups 23 that connect them to each other by a welding method, while the further lower part of the isolated cable 19 above the roof 2 of the lightning protected building structure 1 is placed in a curved pipe culvert 24 made of polyvinyl chloride (PVC) and through an opening 25 of this roof and its supporting reinforced concrete beam 5 is connected to the upper end of the reinforced concrete column 6 so that its lower end is situated at a distance of S = 1 m from the lower surface of the roof 2, wherein the tip 9 of the sleeve head 8 of the lightning rod 7 is situated at a height of h = 5m from the upper surface of the roof 2 of this building structure 1.
In addition, the lower end of the insulated cable 19 is electrically and mechanically connected by a screwing method, by means of a connector 26 fastened to the all of the reinforced concrete column 6, to the upper end of the second part of this two-part down conductor for lightning current discharged to the ground, which is an uninsulated conductor 27 in the form of a galvanized steel strip with a cross-section of 90 mm² and a resistance of down conductor to an earthing 28 of the lightning current amounting to R<0.10 OHM, the conductor being embedded inside the reinforced concrete column 6 and connected by welding method to its main vertical steel reinforcing bar 22, connected to the steel transverse stirrups 23 at intervals L= 1.0 m, which prevents the spark from flashing during a lightning strike at the tip 9 of the head 8 of this lightning protection.
In turn, the lower end of the uninsulated conductor 27, through a control connector 29, attached to the outer surface of the lower end of the reinforced concrete column 6 of the above floor 30 of the protected building structure 1 at the height of k=0.5 m, is electrically and mechanically connected by screwing method to the conductor 27' connected to the earthing 28 with a resistance of less than 10 Ω, made of horizontal electrodes in the form of a 2 m x 2 m grate placed under a foot 31 of the reinforced concrete column 6, wherein the conductor 27' is a steel tape measuring 3 x 30 mm placed in an insulating shield (lightning pipe) not shown in the drawing.

Maintaining the required earthing resistance 28, not exceeding 10Ω, requires its periodical measurements with means of the three-electrode method, of which two horizontally located electrodes 32 and 33 are permanently mounted outside the earthing and are connected by a cable to the control connection 29.

### Example 2

Lightning protection of large-area building structures according to the second embodiment of its implementation, schematically shown in fig. 2 and 4 has a structure similar to that of the lightning protection provided by the protection according to its first embodiment (fig. 1-3), and the difference between both of these embodiments is only that in the second embodiment, as the second part of the two-part down-conductor for the lightning current to the ground, an uninsulated conductor 27 in the form of a bare steel lightning protection strip is used, embedded inside the reinforced concrete column 6 and connected by a welding method with its main vertical steel reinforcing bar 22, and the lower end of this conductor carrying the lightning current to the ground 28 is connected via a control connector 29 with the uninsulated conductor 27' connected to this earthing.

### Example 3

Lightning protection of large-area building structures according to the third embodiment of its implementation, schematically shown in fig. 2 and fig. 5 also has a construction similar to that of the lightning protection provided by these protections according to its first and second embodiment (fig. 1-4), and the difference between these embodiments is only that in the third embodiment, the lower end of the uninsulated upper section 16' of the metal mast 16, of the lightning rod 7 with the early emission of the PDA type, is electrically and mechanically connected by means of a connector 18 with the screwing method to the two upper ends of the first two parts of the two-part down conductors for the lightning current received by the head 8 to the ground, which are two single lead aluminium insulated cables 19 located to each other at a distance of t = 20 cm, the aluminium conductors of which, as lightning current conductors with a cross-section of 15 mm², are covered with high-voltage polyethylene insulation. In addition, the lower end of the lower section 16" of the metal mast 16 together with the insulated cables 19 are attached to the upper offset 6' of the reinforced concrete column 6 equipped with four internal main vertical steel bars 22 (not all shown in the drawing) with transversely located steel stirrups 23 welded to them. In turn, the lower ends of the insulated cables 19, situated respectively at a distance of S = 1 m and S1 = 80 cm from the lower surface of the roof 2 with a metal roofing, through two through holes 25 made in this roof and two pipe culverts 24 made of vinyl polychloride (PVC), tightly embedded in them, lead to the connector 26 attached to the upper end of the wall of the reinforced concrete column 6 and are connected in this connector by a metal screw joint (not shown in the drawing) to the two upper ends of uninsulated conductors 27 in the form of galvanized steel strips, which are the second parts of two-piece down-conductors to ground of the lightning current received by the head 8 of the lightning rod 7 with the early leader emission of the PDA type, which are embedded inside the reinforced concrete column 6 and are connected by a welding method to the main vertical steel reinforcing bars 22 connected to each other by welding to the transversely situated steel bars - stirrups 23, and the lower ends of these uninsulated conductors 27 are connected to the earth 28 through the control connector 29 attached to the outer surface of the reinforced concrete column 6 and the conductors 27'.

### Example 4

Lightning protection of large-area building structures according to the fourth embodiment of its implementation, schematically shown in fig. 2 and fig. 6 has a construction similar to that of the lightning protection according to the first and second embodiment shown in fig. 1 and 2 and fig. 4 and the difference between both of these lightning protections is that in this fourth embodiment, the following are used:
- two identical reinforced concrete columns 6 situated at a distance of F = 20 m from each other, supporting part of the roof 2 with a metal covering, inside which vertically placed uninsulated conductors 27 - galvanized steel strips are embedded, electrically and mechanically connected by electric welding method with steel reinforcements of both of these reinforced concrete columns 6, wherein uninsulated conductors 27 function as second parts of two-part down conductors for lightning current to the ground, and their lower ends are connected through the control connectors 29 with conductors 27' connected to the earthing 28
- a refractory wall 35 protruding above the surface of the metal roofing 2 to a height of H = 1 m, placed between the upper rectangular offsets 6' of both reinforced concrete columns 6
- electrical and mechanical connection of both upper ends of uninsulated conductors 27 - galvanized steel strips with lower ends of single lead copper cables 19 insulated with high-voltage polyethylene insulation, constituting the first parts of these two-part down conductors for lightning current to the ground, wherein both lower ends of insulated cables 19 are embedded in roof pipe culverts 24 made of polyvinyl chloride (PVC) tightly embedded in the through holes 25 of the roof 2 with a metal covering, through which these cables are directed vertically upwards next to the metal masts 16, the lower sections 16" of which placed in tubular insulators 20 made of weather-resistant plastic (PVC), together with insulated cable 19 are attached to the upper rectangular offsets 6' of both reinforced concrete columns 6 by means of holders 21
- electrical and mechanical connection, through a connector 18, of copper leads of insulated cables 19 with upper uninsulated parts 16' with diameters of ø = 30 mm to ø = 38 mm of the metal masts 16 of the lightning rods 7
- electrical and mechanical connection of the upper uninsulated parts 16' of the metal masts 16 through the same connector 18 with the ends of an insulated conductor 36, which was a copper cable embedded in a lightning tube 37 attached by means of plastic holders (not shown) to the lower insulated part 16" of the metal mast 16 of the first lightning rod 7 and to the cuboid upper offset 6' of the first reinforced concrete column 6 and to the upper surface of the refractory wall 35 and also attached from the inside to the metal mast 16 of the second lightning rod 7.

### Example 5

Lightning protection of large-area building structures according to the fifth embodiment, schematically shown in fig. 2 and fig. 7 has a construction similar to that of the lightning protection according to the first and fourth embodiment shown in fig. 1 and 2 and fig. 6, and the difference between these lightning protection devices is that in this fifth embodiment, only one lightning rod 7 with early leader emission PDA is used, whose uninsulated upper section 16' of the metal mast 16 is electrically and mechanically connected with a single lead aluminium cable 19 insulated with high-voltage polyethylene insulation, attached on both sides to the lower insulated part 16" of the metal mast 16, wherein the one lower end of this cable is connected electrically and mechanically through a connector 26 with the upper end of the uninsulated conductor 27 - a galvanized steel strip, embedded inside the first reinforced concrete column 6, and the lower end of this conductor 27 is connected through the control connector 29 to the conductor 27' connected to the earthing 28.

In turn, the second part of the single lead aluminium cable 19 is fixed on the rectangular upper offset 6' of the first reinforced concrete column 6 and on the upper surface of the refractory wall 35 protruding above the surface of the metal roofing 2 to the height of H = 1 m, and the other lower end of this cable 19 through the second roof pipe culvert 24 made of polyvinyl chloride (PVC), tightly embedded in the through hole 25 of the wall 35 and roof 2, is led to the connector 26 placed on the second reinforced concrete column 6 and is connected electrically and mechanically with the upper end of the uninsulated conductor 27 - the galvanized steel strip embedded inside this second reinforced concrete column 6, and the lower end of the conductor 27 is connected to the control connector 29 connected to the conductor 27' connected to the earthing 28.

In further examples of lightning protection of large-area building structures 1:
- the insulated cables 19 has a lead with a cross section of 10 mm² or 70mm²,
- the distance of the lower end of the insulated cable 19 attached together with the connector 26 from the lower surface of the roof 2 of this building 1 was s=0.7m or s=1.5m,
- the insulated cable 19 has a lead made of aluminium,
- the cross-section of the uninsulated conductor 27 embedded inside the reinforced concrete column 6 is 50mm² or 120mm²,
- the uninsulated conductor 27 is electrically and mechanically connected by electric welding with the steel reinforcement 22 of the reinforced concrete column at intervals of L=0.10m or L=2m,
- the insulated conductor (36), is made of copper or aluminium wire, or galvanized steel covered with high-voltage insulation, or aluminium cable placed in the lightning protection tube (37),
- pipe culvert 24 is made of metal,
- the height of the fireproof walls 35 protruding above the surface of the metal roof coverings 2 are H = 0.8 m or H = 1.2 m (in the order of 1 m)
- in order to ensure tightness against rain, the refractory walls 35 are covered entirely with sheet metal or covered with sheet metal from above
- the distance between two reinforced concrete columns 6 is F = 18 m or F = 22 m
- the height h of the metal mast 16 with the head 8 and the blade 9 from the outer surface of the roof 2 of the building structure 1 is greater than 2 m and is preferably 5-7 m.
by also obtaining the correct discharge of the lightning current taken over by the head 8 of the lightning rod 7 to the earthing 28 of this lightning protection.

## Claims

1. Lightning protection of large-area building structures, especially buildings with metal-covered roofs equipped with photovoltaic panels, using a lightning rod with early leader emission of the "PDA" type, mounted on a mast isolated from the metal surface of the roof of the lightning-protected building, connected to the ground with wires, **characterized in that** it consists of at least one two-part down conductor to the ground for the lightning current taken over by a head (8) of a lightning rod (7), the first part of this down conductor being a cable (19) with a metal conductor with a cross-section of 10 mm² up to 70 mm² covered with high-voltage polyethylene insulation, the lower end of which is electrically and mechanically connected to the upper end of the second part of this two-part down conductor, which is an uninsulated conductor (27) with a cross-section of 50 mm² up to 120 mm², embedded inside a reinforced concrete column (6) and inseparably connected with its steel reinforcement (22), whereas the lower end of the uninsulated conductor (27) is connected through a control connector (29) to a conductor (27') connected to an earthing (28).

2. The protection according to claim 1, **characterised in that** the upper end of the metal lead of the insulated cable (19) is electrically and mechanically connected through a connector (18) with the lower end of an upper uninsulated section (16') of a metal mast (16), and a lower part (16") of the mast (16) placed in a plastic tubular insulator (20) is fastened by means of holders (21) together with the upper part of the insulated cable (19) to an upper offset (6') of the reinforced concrete column (6), while the further part of the insulated cable (19) above a roof (2) of a protected building structure (1) is placed in an insulating curved pipe culvert (24) placed in the opening (25) of this roof and is electrically and mechanically connected through a connector (26) attached to the upper end of the reinforced concrete column (6) with the upper end of an uninsulated conductor (27) with a current discharge resistance of R< 0.10 OHM, which is inseparably connected with a steel reinforcement (22) of this column through metal stirrups (23) at intervals of L=0,10 m - 2 m and to the earthing (28).

3. The protection according to claim 1 or 2, **characterised in that** it consists of two two-part down conductors to the ground for the lightning current taken over by the head (8) of the lightning rod (7) attached to the upper offset (6') of the reinforced concrete column (6), connected to the earthing (28) by means of two insulated cables (19) located next to each other at a distance of t = 18 - 25 mm, the lower ends of which are placed in two insulating curved pipe culverts (24), tightly embedded in two through holes (25) made in the roof (2) with a metal covering and connected electrically and mechanically with the upper ends of two uninsulated conductors (27), the lower ends of which are connected through a connector (29) with two other conductors (27') connected to the earthing (28) of the protected building structure (1).

4. The protection according to claim 1 or 2, **characterised in that** it consists of two connected to two earthings (28) two-part down conductors to the ground for the lightning current taken over by the heads (8) of lightning rods (7) attached to the upper offset (6') of two identical reinforced concrete columns (6) spaced at a distance of F = 18 m - 22 m and an insulated conductor (36), the ends of which are electrically and mechanically connected through the connector (18) with the upper uninsulated parts (16') of metal masts (16), whereas this conductor is attached to the lower insulated part (16") of the metal mast (16) of the lightning rod (7) attached to the first reinforced concrete column (6) and to the upper offset (6') of this column, and to the upper surface of a refractory wall (35) and to the insulated part (16") of the metal mast (16) of the lightning rod (7) placed on the second reinforced concrete column (6).

5. The protection according to claim 1 or 2 **characterized in that** its two-part down conductor to the ground for the lightning current taken over by the head (8) of the lightning rod (7) attached to the upper offset (6') of the reinforced concrete column (6) is the insulated cable (19) electrically and mechanically connected to the uninsulated upper section (16') of the metal mast (16) of the lightning rod (7), one lower end of which is electrically and mechanically connected through the connector (26) to the upper end of the uninsulated conductor (27) embedded inside the first reinforced concrete column (6) connected through the control connector (29) with a conductor (27' ) connected to the first earthing (28), while the second part of the insulated cable (19) is attached to the other side to the lower insulated part (16") of the metal mast (16) and to the upper offset (6') of the first reinforced concrete column (6) and to the upper surface of the refractory wall (35), and the other lower end of this cable (19) is led, through an insulating curved pipe culvert (24) tightly embedded in the through hole (25) of the wall (35) and the roof (2), to the connector (26) placed on the second reinforced concrete column (6) and is electrically and mechanically connected to the upper end of the uninsulated conductor (27) embedded inside the second reinforced concrete column (6) and inseparably connected to the steel reinforcement (22) of this column, and the lower end of the uninsulated conductor ( 27) is connected via a control connector (29) with the uninsulated conductor (27') connected to the second earthing (28), the distance (F) between both reinforced concrete columns (6) being 18 m - 22 m.

6. The protection according to any one of claims 1-5, **characterized in that** the connector (26) is located at a distance S=0.7 m to S=1.5 m from the lower surface of the roof (2) of the building structure (1).

7. The protection according to any one of claims 1-5, **characterized in that** the insulated cable (19) has a copper or aluminium conductor.

8. The protection according to any one of claims 1-5, **characterized in that** the uninsulated conductor (27) is galvanized steel strip or bare lightning protection steel strip.

9. The protection according to any one of claims 1-5, **characterized in that** the control connector (29) attached to the outer surface of the lower end of the reinforced concrete column (6) is located above a floor (30) of the protected building structure (1) at the height of k=0.5 m.

10. The protection according to any one of claims 1-5, **characterized in that** tubular insulators (20) are made of polyvinyl chloride (PVC).

11. The protection according to claim 4, **characterized in that** the insulated conductor (36) is a copper or aluminium wire or galvanized steel shielded with high-voltage insulation, or a copper or aluminium cable placed in a lightning protection tube (37).

12. The protection according to claim 4 or 5, **characterized in that** the height (H) of the refractory wall (35) is 0.80m to 1.20m.

13. The protection according to any one of claims 1-5, **characterized in that** the conductor (27') is a steel strip placed in an insulating sheath.
